# EUROPÄISCHE PATENTSCHRIFT

(11) **EP 1 867 456 B1**
(45) Veröffentlichungstag und Bekanntmachung des Hinweises auf die Patenterteilung: **21.07.2010**
(21) Anmeldenummer: 07014410.0
(22) Anmeldetag: 10.04.2003
(51) Int. Cl.: B29C 45/00, B29C 49/06, B29C 49/64

(54) **Verfahren und Vorrichtung zur Bearbeitung von Vorformlingen**
Method and device for machining preforms
Procédé et dispositif destinés au traitement de pré-pièces brutes

(30) Priorität: 10.04.2002 DE 10215722
(43) Veröffentlichungstag der Anmeldung: 19.12.2007
(62) Teilanmeldung aus: 03727196.2
(73) Patentinhaber: HUSKY INJECTION MOLDING SYSTEMS LTD., Bolton ON L7E 5S5 (CA)
(72) Erfinder: Pesavento, Modesto M., 98574 Schmalkalden (DE)
(74) Vertreter: Cramphorn, Conrad

(56) Entgegenhaltungen:
- US-A- 4 034 036
- US-A- 4 115 494
- US-A- 4 690 633
- US-B1- 6 332 770
- PATENT ABSTRACTS OF JAPAN Bd. 005, Nr. 190 (M-100), 4. Dezember 1981 (1981-12-04) & JP 56 113433 A (INOUE MTP CO LTD), 7. September 1981 (1981-09-07)

## Beschreibung

Die Erfindung betrifft ein Verfahren zur Bearbeitung von Vorformlingen aus einem thermoplastischen Kunststoff, die zur Blasverformung in Behälter vorgesehen sind und bei dem die Vorformlinge in einem Spritzgußwerkzeug spritzgußtechnisch hergestellt sind und nach einer Entnahme aus dem Spritzgußwerkzeug verformt werden.

Die Erfindung betrifft darüber hinaus eine Vorrichtung zur Bearbeitung von Vorformlingen aus einem thermoplastischen Kunststoff, die zur Blasverformung in Behälter vorgesehen und in einem Spritzgußwerkzeug spritzgußtechnisch hergestellt sind, bei der die Vorformlinge mindestens von einer Kühleinrichtung beaufschlagt sind.

Ein Verfahren zur Bearbeitung von Vorformlingen aus einem thermoplastischen Kunststoff wird beispielsweise in der PCT-WO 97/39874 beschrieben. Die Vorformlinge werden hier nach einer Entnahme aus dem Spritzgußwerkzeug in Kühlhülsen überführt und durch Beaufschlagung mit einem Innendruck gegen die Wände der Kühlhülse gedrückt. Hierdurch wird während des gesamten Kühlvorganges ein Kontakt der Vorformlinge mit der Wandung der Kühlhülse aufrechterhalten, da durch den einwirkenden Innendruck ein Schrumpfen der Vorformlinge aufgrund der Abkühlung kompensiert werden kann.

Eine blastechnische Verformung von Vorformlingen in Behälter innerhalb einer Blasform wird in der DE 41 28 438 A1 erläutert. Die Blasform ist hier mit porösen Pfropfen versehen, die an eine Druckquelle angeschlossen sind. Durch die Druckluftbeaufschlagung der porösen Pfropfen wird ein Druckluftkissen bereitgestellt, das Oberflächenbeschädigungen der geblasenen Behälter durch ein Gleiten des Materials auf der inneren Oberfläche der Blasform verhindert.

Die US-PS 4,115,494 beschreibt ein Blasformwerkzeug, das ausgestaltet ist, ein Paar von Unterdruckanschlüssen zu umfassen, um Luft aus dem Raum zwischen dem Vorformling und der Kavität des Blasformwerkzeugs abzusaugen und um anschließend einen Druckunterschied aufrecht zu erhalten, um die Wände des ausgedehnten Vorformlings, bei dem es sich nunmehr um eine Flasche handelt, in Kontakt mit den gekühlten Oberflächen des Blasformwerkzeugs zu halten. Eine innenseitige Beaufschlagung mit Unterdruck wird nicht beschrieben.

Die US-PS 4,034,036 beschreibt eine Vorrichtung und ein Verfahren zur Bearbeitung eines Vorformlings für die Verwendung in einem anschließenden Prozess der Blasverformung in einen Behälter, wobei Unterdruck über eine äußere Hülse auf den Vorformling aufgebracht wird. Eine innenseitige Beaufschlagung mit Unterdruck wird nicht beschrieben.

Die WO 00/24562 beschreibt einen Innendorn mit einer Dichtung.

Aufgabe der vorliegenden Erfindung ist es, ein Verfahren der einleitend genannten Art derart zu verbessern, daß eine Herstellung von Vorformlingen mit geringerem Zeitbedarf und bei einfachem konstruktiven Aufbau unterstützt wird .

Diese Aufgabe wird erfindungsgemäß dadurch gelöst, daß die Vorformlinge durch Unterdruckeinwirkung verformt werden, und zwar gemäß einem Verfahren nach Anspruch 1 und einer Vorrichtung nach Anspruch 8.

Die Verformung der Vorformlinge durch Unterdruckeinwirkung im Anschluß an die spritzgußtechnische Herstellung der Vorformlinge führt zu einer Reihe von Vorteilen.

Ein Vorteil besteht darin, daß durch die Unterdruckeinwirkung eine Verformung des Vorformlings in Längsrichtung, in einer radialen Richtung und / oder in einer Umfangsrichtung bezüglich einer Vorformlingslängsachse erfolgen kann, so daß der Vorformling mit einer von der Kontur der Kavitäten des Spritzgußwerkzeuges abweichenden Gestaltung versehen werden kann. Insbesondere ist hierbei daran gedacht, durch die Unterdruckeinwirkung eine Materialverteilung in der Wandung des Vorformlings zu erzeugen, die für eine nachfolgende blastechnische Herstellung von ovalen Flaschen günstig ist. In Umfangsrichtung des Vorformlings können hierdurch unterschiedliche Wanddicken bereitgestellt werden.

Ein weiterer Vorteil besteht darin, daß durch die Unterdruckeinwirkung ungewollt verformte oder vom Spritzgußwerkzeug nicht im vollen Umfang ausgeformte Vorformlinge nachgeformt werden können. Hierdurch ist es zum einen möglich, krumme Vorformlinge auszurichten oder Vorformlingsdeformationen zu kompensieren. Insbesondere ist auch daran gedacht, bei einem Einsatz des erfindungsgemäßen Verfahrens und / oder der erfindungsgemäßen Vorrichtung bewußt im Bereich des Spritzgußwerkzeuges die Zykluszeiten zu verkürzen oder vergrößerte Toleranzen bei den Werkzeuggeometrien des Spritzgußwerkzeuges vorzugeben. Bei einer derartigen bewußt zu frühen Entformung der Vorformlinge wird ein Verziehen der zu heiß entformten Vorformlinge oder eine Ausbildung von Einfallstellen in Kauf genommen, da diese Fehler der Vorformlinge durch die Nachverformung und aufgrund der Unterdruckeinwirkung kompensiert werden können. Die sehr teuren Spritzgußwerkzeuge können hierdurch mit einer vergrößerten Produktivität genutzt werden.

Ein typischer Verformungsvorgang erfolgt derart, daß der Unterdruck innenseitig auf die Vorformlinge einwirkt.

Eine bevorzugte Anwendung besteht darin, daß die Vorformlinge innerhalb einer Kühleinrichtung vom Unterdruck beaufschlagt werden.

Eine preiswerte Unterdruckzuführung kann dadurch erfolgen, daß die Vorformlinge durch ein poröses Material hindurch vom Unterdruck beaufschlagt werden.

Zur Unterstützung einer gleichmäßigen Verteilung des Unterdruckes wird vorgeschlagen, daß der Unterdruck dem porösen Material durch Unterdruckkanäle hindurch zugeführt wird.

Eine Handhabung der Vorformlinge kann dadurch unterstützt werden, daß die Vorformlinge lokal mit einem Druckmittel beaufschlagt werden.

Eine zusätzliche Beeinflussung des Prozeßablaufes kann dadurch erfolgen, daß die Vorformlinge temporär mit einem Druckmittel beaufschlagt werden.

Eine Verformung des Vorformlings von innen her kann dadurch erfolgen, daß eine Verformung der Vorformlinge unter Verwendung eines porösen Innendornes durchgeführt wird.

Eine lokal begrenzte Materialverformung wird dadurch unterstützt, daß vom Innendorn eine lokale Unterdruckeinwirkung auf den Vorformling bereitgestellt wird.

Eine typische Anwendung besteht darin, daß die Verformung des Vorformlings als Zwischenschritt bei der Durchführung eines einstufigen Spritz-Blas-Verfahrens durchgeführt wird.

Ebenfalls ist daran gedacht, daß die Verformung des Vorformlings als Zwischenschritt bei der Durchführung eines zweistufigen Spritz-Blas-Verfahrens durchgeführt wird.

Eine vorteilhafte gerätetechnische Realisierung kann dadurch erfolgen, daß das poröse Material im Bereich einer Kühlhülse angeordnet ist.

Eine gezielte örtliche Vorgabe der Wirksamkeit der realisierten Druckverhältnisse kann dadurch erreicht werden, daß der Innendorn mindestens bereichsweise von einer Dichtung bedeckt ist.

Bei einer vorgesehenen lediglich teilweisen Nachverformung des Vorformlings ist auch daran gedacht, daß der Innendorn im Bereich einer Kuppe von einer Dichtung bedeckt ist.

Eine weitere Variante zur Nachverformung der Vorformlinge besteht darin, daß der Innendorn mit mindestens einer Membran versehen ist, die eine Verteilkammer begrenzt.

Eine typische Werkstoffauswahl besteht darin, daß das poröse Material als ein poröses Metall ausgebildet ist.

Eine besonders gute Wärmeleitfähigkeit kann dadurch erreicht werden, daß das poröse Metall aus Aluminium ausgebildet ist.

Eine andere Ausführungsvariante besteht darin, daß das poröse Material als ein Sintermetall ausgebildet ist.
Diese Materialien können mit variablen Porengrößen, schon ab wenigen µm aufwärts, eingesetzt werden. Je geringer die Porengröße gewählt wird, um so besser ist die Oberflächengüte des Vorformlings. Eine zu geringe Porengröße führt zu einem zu hohen Druck-/Vakuumbedarf. Ferner neigen zu kleine Poren zum Verstopfen durch Staub.
Folgende porösen (luftdurchlässige) Werkstoffe sind beispielsweise handelsüblich verfügbar:
"METAPOR®" PORTEC AG;
"ultraporex®" ultarfilter international AG;
"PorceraxII®" International Mold Steel, INC.;
"KuporeX™" KUBOTA Corporation;

In den Zeichnungen sind Ausführungsbeispiele der Erfindung schematisch dargestellt. Es zeigen:
- Fig. 1: Einen Querschnitt durch eine Kühleinrichtung, bei der von einem porösen Element eine Kühlhülse ausgebildet ist, die jedoch nicht Teil der Erfindung ist,
- Fig. 2: eine gegenüber Fig. 1 modifizierte Ausführungsform, bei der durch das poröse Element sowohl Unterdruck als auch Überdruck in Richtung auf den Vorformling leitbar ist, die jedoch nicht Teil der Erfindung ist,
- Fig. 3: einen Querschnitt durch eine Ausführungsform, bei der eine Mehrzahl von räumlich voneinander getrennten porösen Einsätzen verwendet sind, die steuerbar an Überdruck und / oder Unterdruck anschließbar sind, die jedoch nicht Teil der Erfindung ist,
- Fig. 4.: eine teilweise Darstellung eines Vertikalschnittes durch eine Einrichtung, bei der ein Innendorn für die Vorformlinge aus einem porösen Material für eine in Richtung der Längsachse der Vorformlinge teilweise Nachverformung verwendet wird,
- Fig. 5: eine gegenüber Fig. 4 abgewandelte Ausführungsform, bei der der Innendorn für eine vollständige Nachverformung des vorformlings ausgebildet ist,
- Fig. 6: eine gegenüber Fig. 5 abgewandelte Ausführungsform, bei der Verformungskräfte auf den Vorformling durch am Innendorn angebrachte Membrane aufgebracht werden,
- Fig. 7: einen Querschnitt durch einen in einem Einsatz aus porösem Material angeordneten Vorformling, die jedoch nicht Teil der Erfindung ist,
- Fig. 8: eine Querschnittdarstellung entsprechend Fig. 7 nach einer Verformung des Vorformlings durch Unterdruckeinwirkung die jedoch nicht Teil der Erfindung ist, und,
- Fig. 9: eine schematische Querschnittdarstellung eines verformten Vorformlings gemäß Fig. 8 sowie einer korrespondierenden ovalen Behälterkontur nach einer Blasverformung des Vorformlings, die jedoch nicht Teil der Erfindung ist.

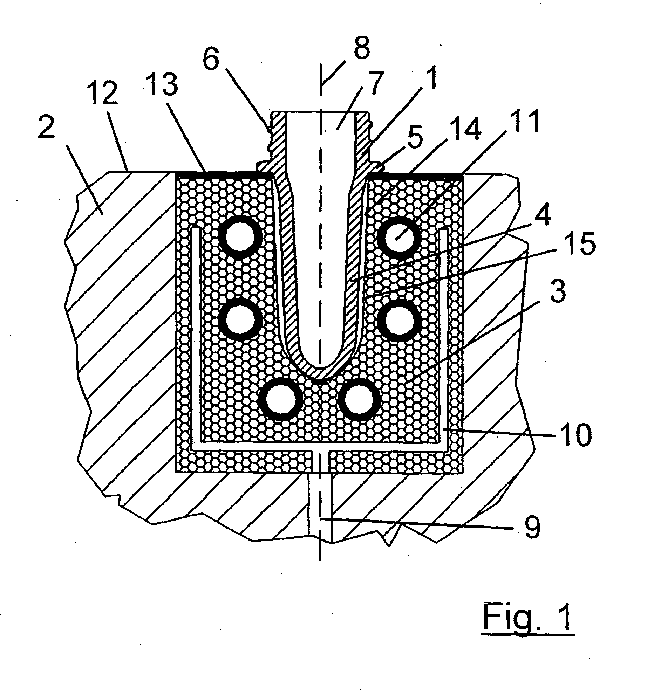

Fig. 1, die jedoch nicht Teil der Erfindung ist, zeigt einen Querschnitt durch eine Vorrichtung zur Bearbeitung von Vorformlingen (1), die einen Rahmen (2) sowie einen Einsatz (3) aus einem porösen Material aufweist. Der Begriff des porösen Materials umfaßt hierbei sowohl offenporige schaumartige Strukturen als auch Sintermaterialien oder vergleichbare Materialstrukturen. Aufgrund der hohen Wärmeleitfähigkeit haben sich insbesondere offenporige Metallschäume, beispielsweise aus Aluminium, bewährt.

Der Vorformling (1) besteht aus einem thermoplastischen Material, beispielsweise aus PET (Polyethylenterephthalat) und ist mit einer Seitenwand (4), einem Stützring (5) sowie einem Mündungsabschnitt (6) versehen. Ein Innenraum (7) des Vorformlings (1) erstreckt sich entlang einer Vorformlingslängsachse (8).

Durch den Rahmen (2) hindurch erstreckt sich ein Unterdruckkanal (9), der mit einem Unterdruckkanal (10) innerhalb des Einsatzes (3) verbunden ist. Im Bereich des Einsatzes (3) sind darüber hinaus Kühlkanäle (11) angeordnet, durch die ein Kühlmedium zirkulieren kann. Im Bereich einer Oberfläche (12) des Rahmens (2) ist eine Oberfläche des Einsatzes (3) von einer Dichtung (13) verschlossen, um bei einer Unterdruckbeaufschlagung ein Ansaugen von Umgebungsluft zu verhindern.

Der Vorformling (1) ist in eine Kavität (14) des Einsatzes (3) derart eingeführt, daß der Stützring (5) im Bereich der Oberfläche des Einsatzes (3) aufliegt. Bei einer Unterdruckbeaufschlagung des Einsatzes (3) wird zwischen dem Vorformling (1) und der Kavität (14) befindliche Luft abgesaugt und der im Bereich des Innenraumes (7) des Vorformlings (1) anstehende Umgebungsdruck drückt die Seitenwand (4) des Vorformlings (1) gegen eine Begrenzungsfläche (15) der Kavität (14). Der hierdurch hervorgerufene Materialkontakt führt zu einer verbesserten Kühlung des Vorformlings (1) und trägt dazu bei, daß der Vorformling (1) die Form der Begrenzungsfläche (15) annimmt.

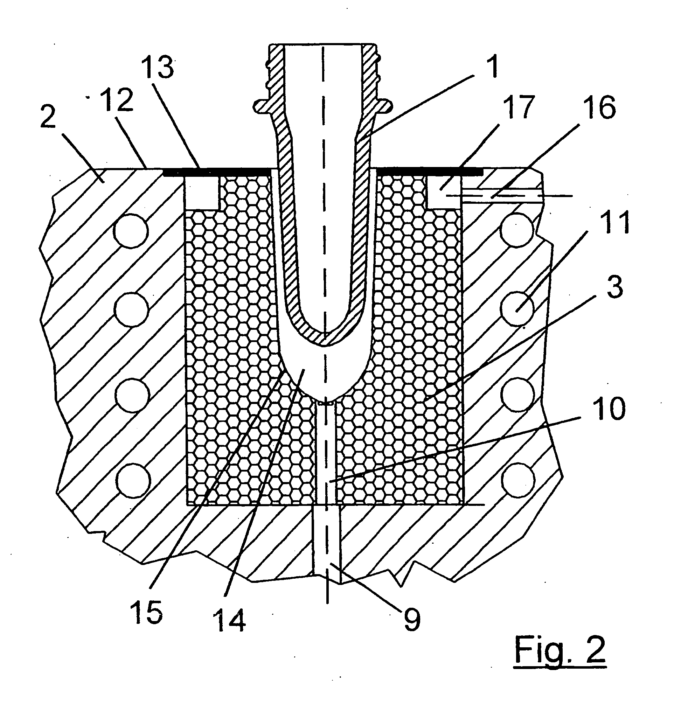

Bei der Ausführungsform gemäß der Fig. 2, die jedoch nicht Teil der Erfindung ist, streckt sich der Unterdruckkanal (10) bis zur Kavität (14) des Einsatzes (3). Darüber hinaus sind die Kühlkanäle (11) im Bereich des Rahmens (2) angeordnet. Zusätzlich zum Unterdruckkanal (9) ist im Bereich des Rahmens (2) ein Druckmittelkanal (16) angeordnet, der in einen Druckmittelanschluß (17) des Einsatzes (3) einmündet. Vorzugsweise erfolgt die Druckmitteleinleitung mit einem geringen Abstand zur Dichtung (13). Hierdurch wird durch die Kavität (14) hindurch eine Luftströmung in Richtung auf den Unterdruckkanal (9) erzeugt, die ein Einführen der Vorformlinge (1) in die Kavität (14) erleichtert und Kratzer am Vorformling (1) durch einen Kontakt mit der Begrenzungsfläche (15) vermeidet. Darüber hinaus wird ein ungleichmäßiger Kontakt des Vorformlings (1) mit dem Einsatz (3) vermieden, der zu ungleichmäßigen Abkühlungen des Vorformlings (1) führen würde.

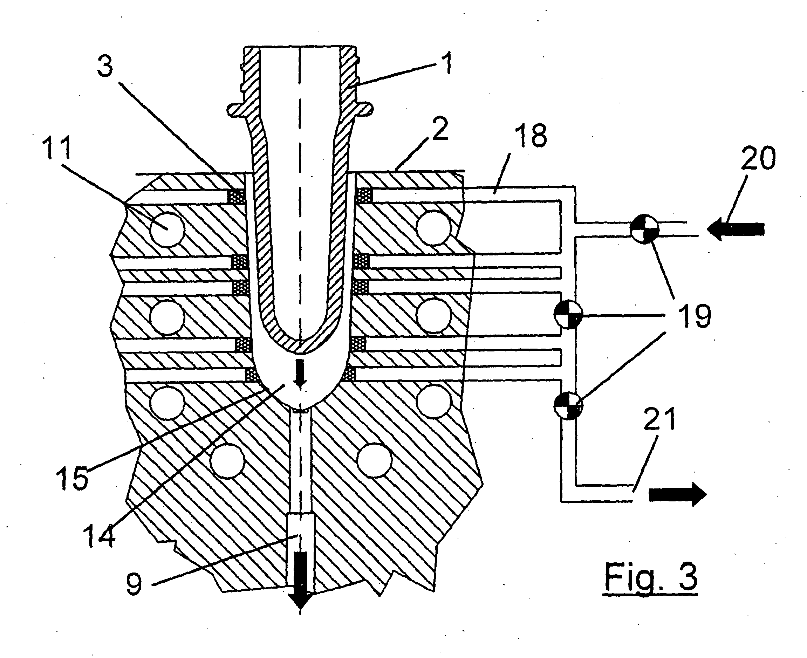

Bei der Ausführungsform gemäß Fig. 3, die jedoch nicht Teil der Erfindung ist, ist die Kavität (14) im Bereich des Rahmens (2) ausgebildet und im Bereich der Begrenzungsfläche (15) der Kavität (14) sind eine Mehrzahl von porösen Einsätzen (3) angeordnet. Die porösen Einsätze (3) sind hier räumlich voneinander getrennt. Darüber hinaus sind die Einsätze (3) jeweils mit Versorgungskanälen (18) verbunden, die über Steuerventile (19) vorgebbar an eine Druckquelle (20) oder an eine Unterdruckquelle (21) anschließbar sind. Auch bei dieser Ausführungsform erstreckt sich der Unterdruckkanal (9) bis in den Bereich der Kavität (14). Um das Einführen des Vorformlings (1) in die Kavität (14) zu erleichtern, wird zuerst nur Unterdruckkanal (9) mit einem Vakuum beaufschlagt. Sobald sich der Vorformling (1) komplett in der Kavität (14) befindet, gibt die Unterdruckquelle (21) ein höheren Unterdruck frei, um den Vorformling (1) an die Begrenzungsfläche (15) zu pressen.

Die räumlich voneinander getrennten Einsätze (3) stellen düsenartige Anordnungen bereit, die lokale Verformungen des Vorformlings (1) hervorrufen oder Druckluftkissen für den Vorformlinge (1) erzeugen können. Insbesondere ist auch daran gedacht, über die Einsätze (3) steuerbar heiße Druckluft zuzuführen, um den Vorformling (1) lokal zur Unterstützung einer vorgegebenen Verformung zu erwärmen.

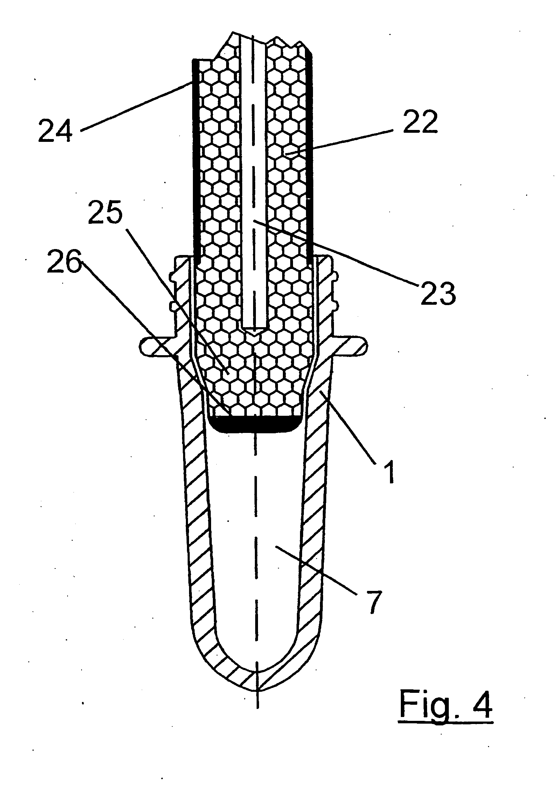

Bei der Ausführungsform gemäß Fig. 4 wird der Vorformling (1) von einem Innendorn (22) beaufschlagt, der aus einem porösen Material ausgebildet ist. Der Innendorn (22) ist mit einem Druckmittelkanal (23) versehen. Der Druckmittelkanal (23) kann in Abhängigkeit von einer jeweiligen Ansteuerung sowohl Überdruck als auch Unterdruck zuführen. Zur Vermeidung von Druckverlusten ist der Innendorn (22) außenseitig bereichsweise mit einer Dichtung (24) versehen. Bei der Ausführungsform gemäß Fig. 4 ist der Innendorn (22) nur für eine bereichsweise Nachverformung des Vorformlings (1) im Bereich des Mündungsabschnittes (6) sowie eines dem Mündungsabschnitt (6) zugewandten Teiles der Seitenwand (4) ausgebildet. Im Bereich einer Kuppe (25) trägt der Innendorn (22) deshalb hier ebenfalls eine Dichtung (26).

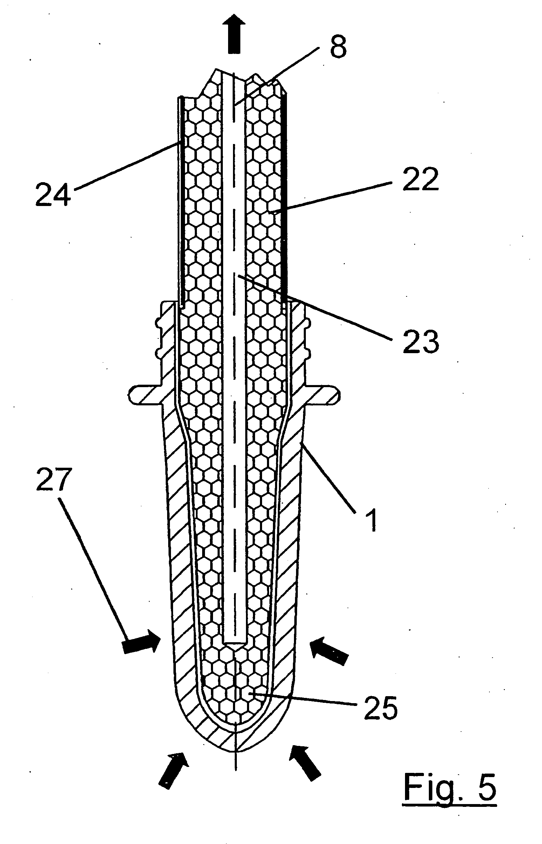

Bei der Ausführungsform gemäß Fig. 5 ist der Innendorn (22) zu einer Nachverformung des Vorformlings (1) entlang der gesamten Ausdehnung der vorformlingslängsachse (8) ausgebildet. Der Innendorn (22) weist deshalb eine gegenüber der Ausführungsform in Fig. 4 abgewandelte Kontur auf. Eine Dichtung (26) im Bereich der Kuppe (25) ist bei dieser Ausführungsform nicht erforderlich. Zusätzlich zu einer Beaufschlagung des Vorformlings (1) mit Hilfe des Innendorns (22) kann gemäß der Ausführungsform in Fig. 5 eine von außen auf den Vorformling (1) einwirkende Luftkühlung (27) realisiert werden.

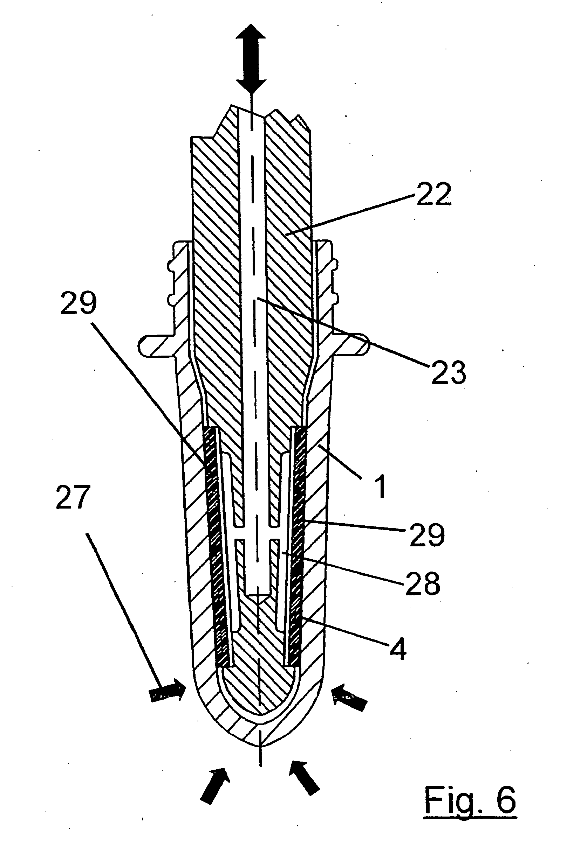

Bei der Ausführungsform gemäß Fig. 6 ist der Druckmittelkanal (23) an Verteilkammern (28) angeschlossen, die von Membranen (29) verschlossen sind. Bei einer Druckbeaufschlagung des Druckmittelkanals (23) werden die Membranen (29) gegen die Seitenwand (4) des Vorformlings (1) gepreßt und führen eine Verformung des Vorformlings (1) durch. Auch durch die von der Membran (29) erzeugte Kraft kann der Vorformling (1) entweder gegen die Innenwandung einer Kühlhülse gedrückt oder in vorgegebener Weise verformt werden.

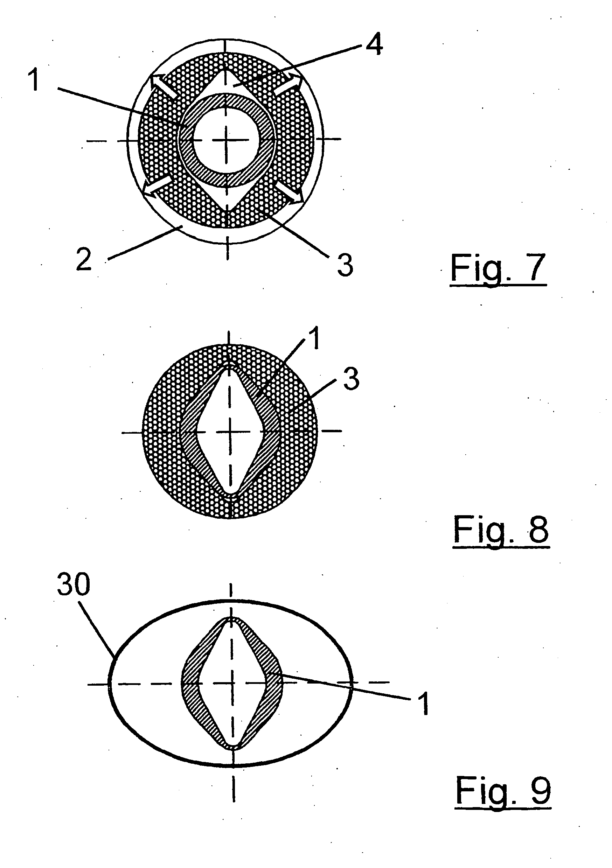

Fig. 7, die jedoch nicht Teil der Erfindung ist, zeigt einen Querschnitt durch einen Einsatz (3) mit einem in die Kavität (14) eingesetzten Vorformling (1). Der Einsatz (3) wird vom Rahmen (2) gehaltert.

Nach einer Unterdruckbeaufschlagung wird der Vorformling (1) gemäß Fig. 1, die jedoch nicht Teil der Erfindung ist, zu einem Vorformling entsprechend Fig. 8, die jedoch nicht Teil der Erfindung ist, verformt. Insbesondere ist aus Fig. 8 zu erkennen, daß durch die Verformung in einer Umfangsrichtung des Vorformlings ein unterschiedlicher Wanddickenverlauf erzeugt wurde. Die Vorformlingsgestaltung gemäß Fig. 8 ist insbesondere für die Herstellung von ovalen Flaschen geeignet.

Fig. 9, die jedoch nicht Teil der Erfindung ist, zeigt die Zuordnung des Vorformlings (1) gemäß Fig. 8 zu einer Behälterkontur (30) eines Behälters mit ovalem Querschnitt. Die Materialverteilung im Vorformling (1) ist derart gewählt, daß diejenigen Bereiche, die bei der anschließenden Blasverformung nur relativ geringfügig gereckt werden, dünner ausgebildet sind als diejenigen Bereiche, die bei der Blasverformung stärker gereckt werden. Durch die entsprechende Materialverteilung werden bei einem geblasenen Behälter eine sehr gleichmäßige Wanddickenverteilung und damit gleichmäßige Materialeigenschaften unterstützt.

Bei einer kombinierten wahlweisen Beaufschlagung des Einsatzes (3) mit Unterdruck und Überdruck kann eine Materialreinigung in einfacher Weise derart durchgeführt werden, daß ohne eingesetzten Vorformling (1) eine Druckmittelbeaufschlagung erfolgt, die zu einem Abblasen von Verunreinigungen führt. Eine Trennung des Vorformlings (1) vom Innendorn (22) kann ebenfalls durch eine Druckmittelbeaufschlagung des Innendorns (22) unterstützt werden. Bei einer kombinierten Verwendung des Innendornes (22) und eines Einsatzes (3) aus einem porösen Material kann eine Trennung des Vorformlings (1) vom Innendorn (22) auch durch eine externe Unterdruckbeaufschlagung unterstützt werden.

## Patentansprüche

1. Verfahren zur Bearbeitung eines spritzgegossenen thermoplastischen Vorformlings (1) für die Verwendung in einem anschließenden Prozess der Blasverformung in einen Behälter, wobei das Verfahren den folgenden Schritt umfasst:
Verformen des Vorformlings (1) durch Unterdruckeinwirkung, wobei der Unterdruck innenseitig auf den Vorformling (1) einwirkt.

2. Verfahren nach Anspruch 1, wobei der Vorformling (1) auf einem Innendorn (22) aufgenommen wird, der Innendorn (22) wenigstens bereichsweise ein poröses Material umfasst und der Unterdruck über das poröse Material aufgebracht wird.

3. Verfahren nach Anspruch 1, wobei der Vorformling (1) auf einem Innendorn (22) aufgenommen wird, der Innendorn (22) wenigstens bereichsweise ein poröses Material sowie wenigstens eine Dichtung (24, 26) umfasst, der Unterdruck über das poröse Material aufgebracht wird und die wenigstens eine Dichtung (24, 26) ausgestaltet ist, das Einsaugen von Umgebungsluft zu verhindern, wenn der Unterdruck aufgebracht wird.

4. Verfahren nach Anspruch 2 oder 3, wobei der Unterdruck über einen Unterdruckkanal (23) aufgebracht wird.

5. Verfahren nach Anspruch 2 oder 3, wobei das Verfahren ferner den Schritt des Aufbringens eines Überdrucks auf den Vorformling (1) umfasst.

6. Verfahren nach Anspruch 5, wobei der Innendorn (22) ferner wenigstens eine Membran (29) umfasst, die eine Verteilkammer (28) definiert, und wobei dann, wenn Druck auf die Verteilkammer (28) aufgebracht wird, die wenigstens eine Membran (29) gegen die Seitenwand (4) des Vorformlings (1) gedrückt wird und die Verformung des Vorformlings (1) bewirkt.

7. Verfahren nach einem der Ansprüche 1 bis 6, wobei das Verfahren ferner den Schritt des Kühlens der Außenseite des Vorformlings (1) umfasst.

8. Vorrichtung zur Bearbeitung eines spritzgegossenen thermoplastischen Vorformlings (1) für die Verwendung in einem anschließenden Prozess der Blasverformung in einen Behälter, wobei die Vorrichtung umfasst:
einen Innendorn (22), der dazu ausgestaltet ist, einen inneren Abschnitt des Vorformlings (1) aufzunehmen, und wobei der Innendorn (22) wenigstens bereichsweise ein poröses Material umfasst, um den aufgenommenen Vorformling (1) mittels der Aufbringung eines Unterdrucks über das poröse Material zu verformen, indem der Vorformling (1) wenigstens bereichsweise in Berührung mit diesem gezogen wird, wobei der Unterdruck innenseitig auf den Vorformling (1) einwirkt,
wobei der Innendorn (22) ferner eine Dichtung (24) umfasst, die ausgestaltet ist, das Einsaugen von Umgebungsluft zu verhindern, wenn der Unterdruck aufgebracht wird, sowie eine weitere Dichtung (26), die auf einem runden Ende des Innendorns (22) für ein teilweises Verformen des Vorformlings (1) ausgestaltet ist.

9. Vorrichtung nach Anspruch 8, wobei der Innendorn (22) einen Unterdruckkanal (23) umfasst.

10. Vorrichtung nach einem der Ansprüche 8 oder 9, wobei der Innendorn (22) für eine Verbindung mit einer Druckquelle zum Aufbringen eines Überdrucks auf den Vorformling (1) ausgestaltet ist.

11. Vorrichtung nach Anspruch 10, wobei der Innendorn (22) ferner wenigstens eine Membran (29) umfasst, die eine Verteilkammer (28) definiert, um den aufgenommenen Vorformling (1) durch die Einwirkung von Druck zu verformen, der auf die Verteilkammer (28) aufgebracht wird, wobei die wenigstens eine Membran (29) gegen die Seitenwand (4) des Vorformlings (1) gedrückt wird und die Verformung des Vorformlings (1) bewirkt.

12. Vorrichtung nach einem der Ansprüche 8 bis 11, wobei die Vorrichtung ferner Mittel zum Kühlen der Außenseite des Vorformlings (1) umfasst.

13. Vorrichtung nach einem der Ansprüche 8 bis 12, wobei das poröse Material umfasst:
ein poröses Metall;
ein poröses Metall, das aus Aluminium besteht;
ein poröses Metall, das aus Stahl besteht;
ein poröses Metall, das aus einer Kupferlegierung besteht; und/oder
ein gesintertes Metall.

14. Vorrichtung nach Anspruch 13, wobei das poröse Material variable Porengrößen umfasst, die größer als einige wenige µm sind.

15. Spritzgießmaschine, umfassend eine Vorrichtung, die gemäß einem der Ansprüche 8 bis 14 ausgebildet ist.

## Claims

1. A method for processing an injection molded thermoplastic preform (1) for use in a subsequent process of blow molding into a container, the method comprising the step of deforming the preform (1) by the action of negative pressure acting internally on the preform (1).

2. The method according to claim 1, wherein the preform (1) is received on a mandrel (22), at least a portion of the mandrel (22) comprising a porous material, and wherein the negative pressure is applied through the porous material.

3. The method according to claim 1, wherein the preform (1) is received on a mandrel (22), at least a portion of the mandrel (22) comprising a porous material and at least one seal (24, 26), and wherein the negative pressure is applied through the porous material and the at least one seal (24, 26) is configured to prevent the intake of ambient air when the negative pressure is applied.

4. The method according to claim 2 or claim 3, wherein the negative pressure is applied via a negative pressure channel (23).

5. The method according to claim 2 or claim 3, wherein the method further includes the step of applying overpressure to the preform (1).

6. The method according to claim 5, wherein the mandrel (22) further comprises at least one membrane (29) defining a distributor chamber (28), and wherein, when pressure is applied to the distributor chamber (28), the at least one membrane (29) is pressed against the side wall (4) of the preform (1) and causes the deformation of the preform (1).

7. The method according to any one of claims 1 to 6, wherein the method further includes the step of cooling the outer surface of the preform (1).

8. A device for processing an injection molded thermoplastic preform (1) for use in a subsequent process of blow molding into a container, the device comprising:
a mandrel (22) configured for receiving an internal portion of the preform (1), and wherein at least a portion of the mandrel (22) comprises a porous material for deforming the received preform (1) by the action of negative pressure through the porous material by drawing at least one of the preform (1) portions into contact therewith,
wherein the mandrel (22) further comprises a seal (24) configured to prevent the intake of ambient air when the negative pressure is applied, and another seal (26) configured on a round end of the mandrel (22) for a partial remolding of the preform (1).

9. The device according to claim 8, wherein the mandrel (22) comprises a negative pressure channel (23).

10. The device according to claim 8 or claim 9, wherein the mandrel (22) is configured for connection with a pressure source for applying an overpressure to the preform (1).

11. The device according to claim 10 wherein the mandrel (22) further comprises at least one membrane (29) defining a distributor chamber (28) for deforming the received preform (1) by the action of pressure applied to the distributor chamber (28) wherein the at least one membrane (29) is pressed against the side wall (4) of the preform (1) and causes the deformation of the preform (1).

12. The device according to any one of claims 8 to 11, wherein the device further comprises means for cooling the outer surface of the preform (1).

13. The device according to any one of claims 8 to 12, wherein the porous material comprises:
a porous metal;
a porous metal made of aluminium;
a porous metal made of steel;
a porous metal made of a copper alloy; and/or
a sintered metal.

14. The device according to claim 13, wherein the porous material includes variable pore sizes that are greater than a few µm.

15. An injection molding machine including the device configured in accordance with any one of claims 8 to 14.

## Revendications

1. Procédé de traitement d'une pré-pièce brute (1) thermoplastique moulée par injection destinée à être utilisée dans un processus ultérieur de soufflage pour transformation en un récipient, ledit procédé englobant les étapes suivantes :
déformation de la pré-pièce brute (1) par application d'une dépression agissant sur la pré-pièce brute (1) de l'intérieur.

2. Procédé selon la revendication 1, dans lequel la pré-piece brute (1) est engagée sur un goujon intérieur (22), le goujon intérieur (22) comprenant au moins en partie un matériau poreux, et la dépression étant appliquée à travers ledit matériau poreux.

3. Procédé selon la revendication 1, dans lequel la pré-piece (1) est engagée sur un goujon intérieur (22), le goujon intérieur (22) comprenant au moins en partie un matériau poreux et au moins un joint (24, 26), la dépression étant appliquée à travers le matériau poreux et le ou les joint(s) (24, 26) étant conçu(s) de manière à empêcher l'aspiration d'air ambiant pendant l'application de la dépression.

4. Procédé selon l'une des revendications 2 ou 3, dans lequel la dépression est appliquée par le biais d'un canal d'aspiration (23).

5. Procédé selon l'une des revendications 2 ou 3, ledit procédé comprenant en outre l'étape de l'application d'une surpression sur la pré-pièce brute (1).

6. Procédé selon la revendication 5, dans lequel le goujon intérieur (22) comprend en outre au moins une membrane (29) définissant une chambre de répartition (28), et dans lequel la ou les membrane(s) (29) est/sont poussée(s) contre la paroi latérale (4) de la pré-pièce brute (1) pendant l'application d'une pression sur la chambre de répartition (28), entraînant ainsi la déformation de la pré-pièce brute (1).

7. Procédé selon l'une des revendications 1 à 6, ledit procédé comprenant en outre l'étape du refroidissement de la face extérieure de la pré-pièce brute (1).

8. Dispositif de traitement d'une pré-pièce brute (1) thermoplastique moulée par injection destinée à être utilisée dans un processus ultérieur de soufflage pour transformation en un récipient, ledit dispositif englobant :
un goujon intérieur (22) conçu de manière à recevoir un segment intérieur de la pré-pièce brute (1), le goujon intérieur (22) comprenant au moins en partie un matériau poreux afin de déformer la pré-pièce brute (1) engagée sur le goujon par application d'une dépression par le biais du matériau poreux, la pré-pièce brute (1) entrant au moins en partie en contact avec celui-ci, et la dépression agissant sur la pré-pièce brute (1) de l'intérieur,
et dans lequel le goujon intérieur (22) comprend en outre un joint (24) conçu de telle manière qu'il empêche l'aspiration d'air ambiant pendant l'application de la dépression, ainsi qu'un autre joint (26) conçu sur une extrémité ronde du goujon intérieur (22) pour une déformation partielle de la pré-pièce brute (1).

9. Dispositif selon la revendication 8, dans lequel le goujon intérieur (22) comprend un canal d'aspiration (23).

10. Dispositif selon l'une des revendications 8 ou 9, dans lequel le goujon intérieur (22) est conçu de manière à pouvoir être connecté à une source de pression en vue d'appliquer une surpression sur la pré-pièce brute (1).

11. Dispositif selon la revendication 10, dans lequel le goujon intérieur (22) comprend en outre au moins une membrane (29) définissant une chambre de répartition (28), afin de déformer la pré-pièce brute (1) engagée sur le goujon par l'effet d'une pression appliquée sur la chambre de répartition (28), et dans lequel au moins une membrane (29) est poussée contre la paroi latérale (4) de la pré-pièce brute (1), entraînant ainsi la déformation de la pré-pièce brute (1).

12. Dispositif selon l'une des revendications 8 à 11, le dispositif comprenant en outre des moyens de refroidissement de la face extérieure de la pré-pièce brute (1).

13. Dispositif selon l'une des revendications 8 à 12, dans lequel le matériau poreux comprend :
un métal poreux ;
un métal poreux composé d'aluminium ;
un métal poreux composé d'acier ;
un métal poreux composé d'un alliage de cuivre ; et/ou
un métal fritté.

14. Dispositif selon la revendication 13, dans lequel le matériau poreux comprend des tailles de pores variables supérieures à quelques µm.

15. Machine de moulage par injection comprenant un dispositif selon l'une des revendications 8 à 14.
